Europäisches Patentamt

European Patent Office

Office européen des brevets

(11) Publication number : **0 520 797 A2**

## (12) EUROPEAN PATENT APPLICATION

(21) Application number : 92305866.3

(22) Date of filing : 25.06.92

(51) Int. Cl.$^5$ : **G01N 1/00, B01L 11/00**

(30) Priority : 25.06.91 US 720372
04.10.91 US 770050

(43) Date of publication of application :
30.12.92 Bulletin 92/53

(84) Designated Contracting States :
DE FR GB IT

(71) Applicant : HELENA LABORATORIES
CORPORATION
1530 Lindbergh Drive
Beaumont Texas 77704 (US)

(72) Inventor : Golias, Tipton L.
1290 Thomas Road
Beaumont, Texas 77706 (US)
Inventor : Mayes, Ovay H.
660 Goodhill Road
Beaumont, Texas 77706 (US)
Inventor : Sarrine, Robert J.
2010 Stacey
Beaumont, Texas 77707 (US)

(74) Representative : W.P. Thompson & Co.
Coopers Building, Church Street
Liverpool L1 3AB (GB)

(54) Tube feed system for test tube pump inserter.

(57) A pump inserter apparatus receives a row of pump mechanisms, each pump mechanism (20) having a spike (26) with a system of bores, bellows (29) for forcing air through the spike (26), and a flexible tube (32) lodged in the spike (26). The apparatus includes a reciprocating drive system (22) which forces the pump mechanisms (20) downward until their spikes (26) extend through resilient closures on a row of test tubes. It then raises the test tubes to a tube feed system (23) which includes a fixed roller (208) and a swingable roller (228). The rollers (208, 228) are rotated to advance the flexible tubes (32) downward until the flexible tubes (32) reach a desired depth within the test tubes. After removal from the pump inserter apparatus, the bellows (29) can then be manually compressed to force fluid from the test tube out through the flexible tube (32).

FIG. 2.

The present invention relates to an apparatus for inserting pump mechanisms into containers such as test tubes which are sealed by closures so that the contents of a test tube may be discharged through a flexible tube without removing the closure from the test tube.

Heretofore it has been known to provide a resilient closure or rubber stopper for a container and to discharge the contents of the container by first establishing inlet and outlet flow paths through the closure. Air pressure through the inlet path pressurizes the interior of the container and causes the contents to flow through the outlet path. Devices of this type are known, and prior to the present invention, the establishing of the fluid flow paths involved manually puncturing the closure with a pump mechanism and then manually forcing a flexible tube into the test tube to complete the outlet flow path.

There are numerous concerns when puncturing the closure of a test tube. A fundamental problem, of course, is that test tubes are often formed of glass and, therefore, can break if excessive force is utilized. Equally important is the need to align a puncture hole in the closure substantially parallel to the elongated axis of the test tube to provide proper positioning of the pump mechanism. Yet another problem in connection with the prior art method of manually attaching pump mechanisms to test tubes by puncturing test tube closures and then manually forcing in flexible tubes is the difficulty in manipulating small articles and the associated labour costs if a large number of test tubes are to be equipped with pumps that are ready for operation.

The present invention aims to avoid or at least alleviate the above shortcomings by providing a pump inserter apparatus which includes not only a reciprocating drive system for mounting the pumps on the test tubes, but also a tube feed system for advancing the tubes into the test tubes after the pumps have been mounted.

According to the present invention there is provided an apparatus for attaching pump mechanisms to sealed test tubes and for then advancing flexible tubes held by the pump mechanisms into the test tubes, each test tube being sealed by a resilient, puncturable closure and each pump mechanism having puncturing means for puncturing a closure, said apparatus comprising:

a test tube holder for holding a row of test tubes;

a pump holder for holding a row of pump mechanisms with their puncturing means directed toward the closures of the test tubes;

moving means for moving the pump holding means and the test tube holding means together until the puncturing means puncture the closures and for then moving the pump holder and the test tube holder apart while the test tubes are supported via the pump mechanisms by the pump holder; and

a tube feeder actuatable after the closures have been punctured, for urging the flexible tubes toward the test tubes.

The present invention also provides a tube feed system for use with the apparatus of the present invention for mounting a pump mechanism having a puncturing means on a test tube sealed by a closure by puncturing the closure with the puncturing means, to advance a flexible tube carried by the pump mechanism into the test tube through a channel in the puncturing means, wherein the tube feed system comprises:

a pair of rollers which are movable with respect to one another between open and closed position; holders (16, 124) for holding the test tube and pump mechanism so that the flexible tube is positioned between the rollers when they are moved to the closed position;

first moving means for mobing the rollers from the open position to the closed position;

holding means for holding the rollers in the closed position with the flexible tube pinched between them; and

second moving means for rotating the rollers while they are held in the closed position to force the flexible tube through the channel in the puncturing means.

The present invention will now be described by way of example only with reference to the accompanying drawings, wherein like reference numerals identify corresponding components and wherein:-

Fig. 1 is an elevation view of a pump inserter apparatus with the pump mechanisms illustrated at a first station, the test tubes illustrated at a second station, and the rollers of the tube feed system illustrated in their open position;

Fig. 2 is a perspective illustration of the apparatus of Fig. 1 with the test tubes and pump mechanisms removed;

Fig. 3 is a front view, partially in section, showing one form of a pump mechanism;

Fig. 4 is a perspective illustration of a rack for holding a plurality of test tubes;

Fig. 5 is an elevation view of a plurality of pump mechanisms positioned in a holder;

Fig. 6 is an enlarged, partially exploded perspective illustration of a tray slide employed in the apparatus of Figs. 1 and 2;

Fig. 7 is a partially exploded front perspective illustration of a reciprocating drive system which is employed in the apparatus of Figs. 1 and 2 for inserting the pump mechanisms into the test tubes;

Fig. 8 is a perspective illustration of a portion of the system of Fig. 7; and

Fig. 9 is an exploded rear perspective partial illustration of the system of Fig. 7.

Fig. 10 is a front elevational view of a tube feed system which is employed in the apparatus of Figs. 1 and 2;

Figs. 11A and 11B provide an exploded perspective view of the tube feed system;

Fig. 12 is a sectional view taken along line 12-12 of Fig. 10; and

Fig. 13 is a cross-sectional view through the fixed roller and swing roller as they rotate to advance a flexible tube.

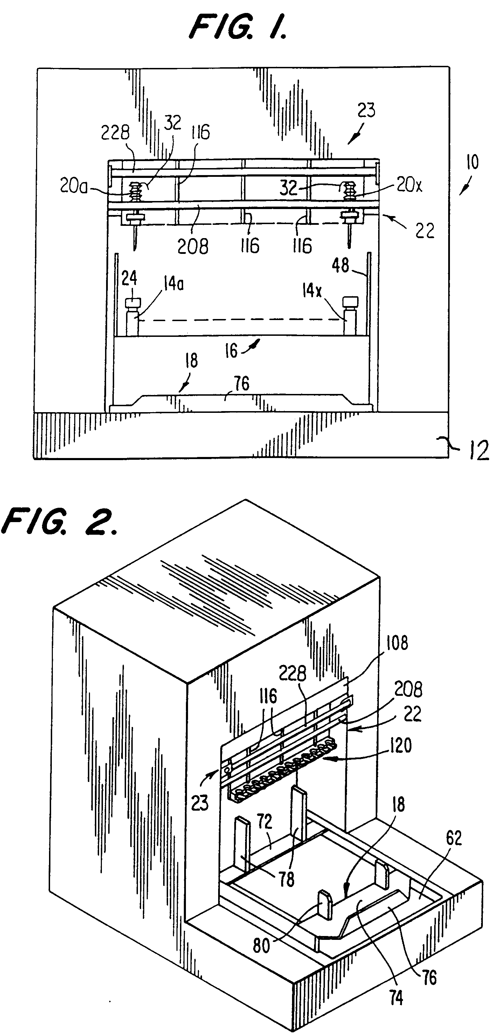

Referring to the drawings, Fig. 1 provides an overall front elevation illustration of a pump inserter apparatus which includes a housing 10 supported on a chassis 12. A plurality of test tubes 14a....14x are mounted in a test tube tray 16, which is removably positioned on a slide 18. The slide 18 is mounted for sliding movement forwardly and rearwardly relative to the chassis 12. A plurality of pump mechanisms 20a...20x are mounted in a reciprocating drive system 22 and are moved vertically downwardly for attachment to the test tubes.

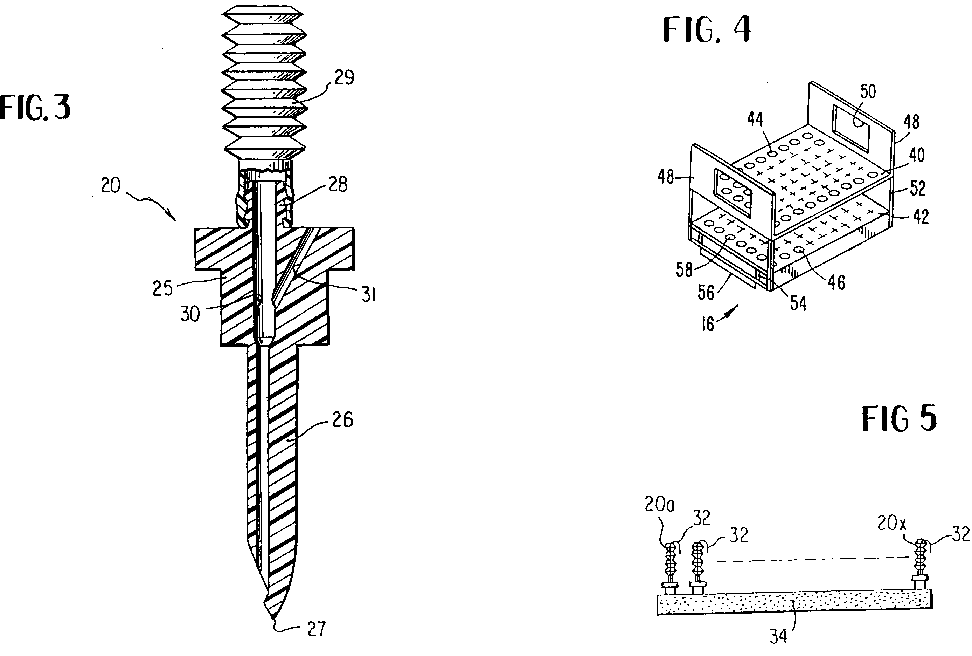

Specifically, the pump mechanisms 20 are positioned at a first station and the slide 18 is indexable at a second station aligned vertically below the first station. A row of test tubes 14 is positioned in tray 16, which is mounted in slide 18, and each test tube 14 is closed or sealed with a rubber closure or cap 24. Referring next to Fig. 3, each pump mechanism 20 includes an elongated spike having a head portion 25 of circular cross section, and the cross section thereafter tapering to a thin, flat blade-like portion 26 culminating in a puncturing tip 27. A projection 28 having annular gripping protrusions is provided to facilitate securing a bellows 29 to the head portion 25. Although not shown, the upper surfaces of bellows 29 has a breather hole. A bore 30 is provided through the spike, from bellows 29 to an opening adjacent puncturing tip 27 (which is centered to provide for self-centering of the spike as it is inserted, as will be discussed, into the closure 24). A second bore 31 is provided in head portion 25 at an angle relative to the longitudinal axis of the bore 30, the bore 31 having an outer end which is accessible from the outside and an inner end which intersects the bore 30. A flexible delivery tube 32 closure 24 is pierced. Tube 32 is preferably made of "Teflon", which is a trademark for a polytetrafluoroethylene, and although not shown its inner end (that is, the end that is inserted into the spike before closure 24 is pierced) is preferably cut at a slant. The outer diameter of tube 32 is smaller than the inner diameter of the narrowest portion of bore 30. It is also slightly smaller than the inner diameter of bore 31, thus providing a certain clearance. As will be discussed in detail later, after the spike has punctured the closure 24, tube 32 is advanced through the opening adjacent tip 27 and comes to a position which can be brought beneath the surface of the fluid in the test tube 14 by tilting the test tube 14. When the end of tube 32 is thus positioned beneath the surface of the fluid, a pressure increase within test tube 14 due to manual compression of bellows 29 causes fluid to flow through tube 32 to an awaiting microscope slide, receptacle, or other article so that medical testing can be conducted. The above-noted clearance between tube 32 and bore 31 is too slight to hamper this pumping action, and indeed has been found to be beneficial. The clearance provides a bi-pass path for permitting air to enter the test tube or leave it without forcing fluid through tube 32 should the external air pressure gradually change or should the pressure within test tube 14 change due to warming or cooling of its contents.

Further information about pump 20 can be found in the United States Patent Application with the Serial Number 07/504,597, filed April 4th 1990.

As is illustrated generally in Fig. 5, a plurality of pump mechanisms 20a...20x may be initially aligned in a straight line relative to a protector such as a block 34 (preferably made of styrofoam or the like - "styrofoam" is a trade mark, with the blade portions 26 being inserted into the block 34. The underside of head portion 25 functions to limit the depth of insertion of each pump mechanism 20 into the styrofoam block 34. The collection of pump mechanisms 20 mounted on the styrofoam block 34 is loaded into the reciprocating drive system 22 at the first station, and then the reciprocating drive system moves vertically to first strip the pump mechanisms 20 from the styrofoam block 34 and thereafter to move the spikes into engagement with the closures 24 on the respective test tubes 14 so that the puncturing tips 27 pierce the closures 24 and are inserted into the test tubes. Reciprocating drive system 22 is then actuated again to move the pump mechanisms 20 and the test tubes 14 attached thereto to a raised position, where a tube feed system 23 (which will be described in more detail later) advances the flexible tubes 32 through the blade portions 26 and into the test tubes 14. After reciprocating drive system 20 is lowered again, the pump mechanisms 20 are disengaged from the reciprocating drive system 22, and the slide 18 may be moved to bring another row of test tubes thereafter into position under the first station. Then another block 34 loaded with pump mechanisms is loaded into the reciprocating drive system 22, and the sequence of steps is repeated to attach pump mechanisms 20 to a second row of test tubes 14 and feed in the flexible tubes 32.

Referring next to Fig. 4, the details of the tray 16 for supporting an array of test tubes 14 will now be explained. The tray 16 is formed as a generally open framework including upper and lower generally horizontally positioned thin plates 40 and 42. Plate 40 has an array of apertures 44 therein, and plate 42 has an array of apertures 46 therein, apertures 44 and 46 being vertically aligned. At opposite ends of the upper plate 40 are a pair of end members 48, each of which has a large aperture 50 such that the tray may be conveniently lifted and moved. Vertical supports 52 are provided to interconnect the upper and lower plates and maintain them rigidly secured together, and additional supports 54 are secured to the lower plate 42 and depend downwardly therefrom to maintain the plate 42 above a base 56. A base 56 is provided at each end of the tray, and supports 54 are of sufficient length such that when the base 56 rests on a horizontal surface and test tubes are inserted through the apertures in the respective plates, the bottoms of the test tubes will not contact the horizontal surface. Also provided in the lower plate 42 are alignment apertures 58 (only one is shown) to assist in aligning and indexing the tray as will hereinafter be described.

Referring next to Figs. 1, 2 and 6, details of the slide 18 will now be provided. The slide 18 includes a floor 62 which is of generally rectangular configuration. A pair of elongated tracks 64 are secured to opposite sides of the floor, extending from the front to the rear. The floor 62 is secured to the chassis 12 and is provided with apertures 66 at opposite sides thereof which function in cooperation with detents 68 (Fig. 7) for indexing the position of the slide 18 as will be explained in greater detail.

The slide 18 further includes a pair of elongated bars 70 extending generally parallel to the tracks 64, and each bar 70 is provided with a groove to engage its respective track 64. A first strap plate 72 extends laterally between the elongated bars and is secured to both of the bars at one end thereof, and a second strap plate 74 extends laterally between the elongated bars and is secured thereto at the other end of the bars, such that the two bars 70 and the two strap plates 72, 74 form a rectangular frame. The front plate 74 has an upwardly-turned flange or lip 76. A pair of blocks 78 extend vertically upwardly from the rear strap plate 72, and a pair of blocks 80 extend vertically upwardly from the front strap plate 74. These four blocks serve as guides such that the tray 16, with the test tubes therein, will be generally positioned between these four blocks. Thus, the rear blocks limit the rearward tray movement, and the front blocks limit forward tray movement. Each of the bars 70 includes an upwardly extending pin 82 to engage the apertures 58 in the lower plate 42 of the tray 16. In this fashion, there is positive alignment between the test tube tray 16 and the rectangular frame of the slide 18. The bars 70 each include a plurality of transverse notches 84 on their underside to engage a detent 68 as will be further explained.

Intermediate the front and rear strap plates 74, 72 is a pressure block 86 which is secured to the floor 62. This pressure block 86 has a plurality of recesses 88 therein shaped to engage and support the bottoms of the test tubes during the time that the test tubes are subjected to pressure. Since floor 62 is secured to the chassis 12, the pressure block 86 is fixed relative to the second station such that as each succeeding row of test tubes is indexed to the second station, the row of test tubes for which pump mechanisms are being inserted will be positioned above the pressure block 86. The pressure block 86 is made out of a resilient plastic such as Delrin (Delrin is a trade mark), and the opposed bars 70 which slide along the tracks 64 may also be made of Delrin plastic.

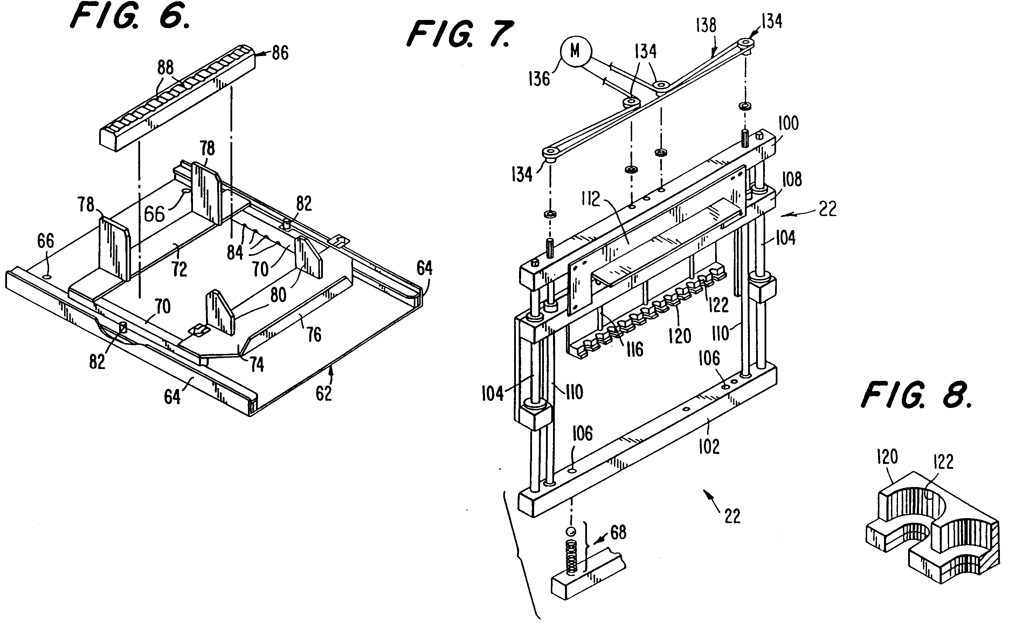

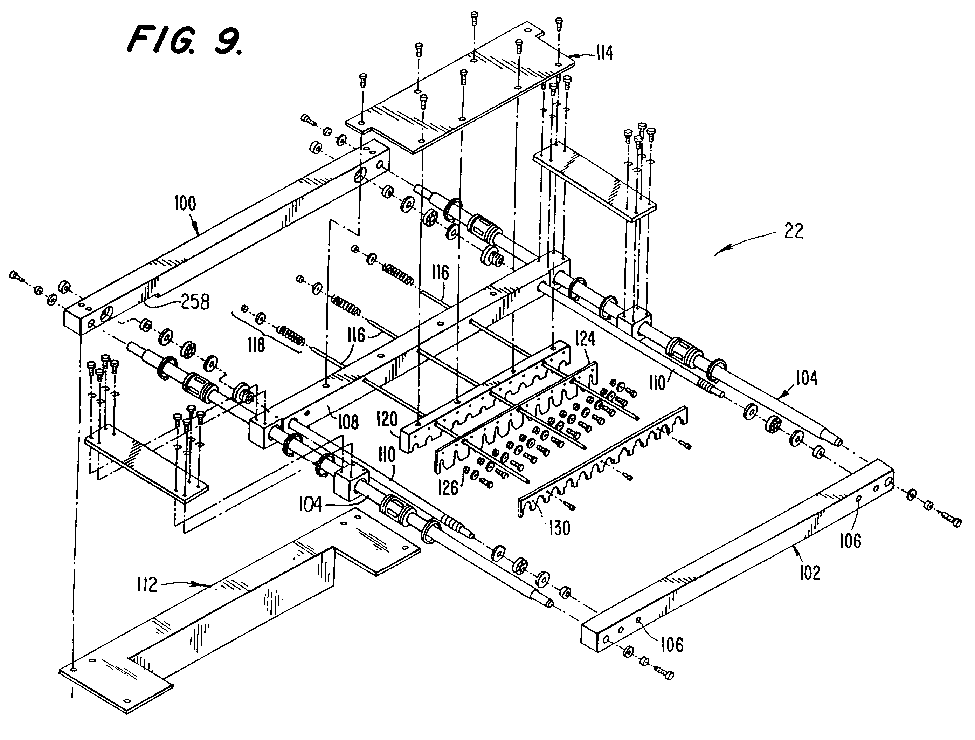

Referring next to Figs. 2, 7,8 and 9, the reciprocating drive system 22 will now be explained in greater detail. It should be understood and appreciated that the apparatus is symmetrical about a vertical plane and thus, as viewed from the front elevation view, the left side of the apparatus is the mirror image of the right side. The reciprocating drive system 22 includes a generally rectangular vertically positioned framework. It should be pointed out that in Fig. 7 the reciprocating drive system 22 is seen from the front of the apparatus, while in Fig. 9 the system 22 is viewed from the rear of the apparatus. The generally rectangular framework for the pump drive apparatus includes a top generally rectangular bar 100 and a bottom generally rectangular bar 102 interconnected by two bearing shafts 104. The bearing shafts 104 are positioned at opposite ends of the bars 100, 102 to provide a generally rectangular framework. The bottom bar 102 is secured to the chassis 12 and is provided with apertures 106 to receive the detent means 68. Detent means 68 is illustrated as a spring loaded bearing (only one of which is illustrated) such that the bearing will extend through apertures 66 (see Fig. 6) in floor 62 to sequentially engage notches 84 as the slide 18 carrying the tray 16 is moved inwardly and outwardly of the housing. Thus, the tray, and slide, are indexable relative to the bottom bar 102.

Means are provided for retaining the series of pump mechanisms 20 and for inserting the needles of the pump mechanisms through the closure 24 of the test tubes 14. Specifically, a rectangular bar 108 is horizontally positioned parallel to, and intermediate, bars 100, 102. Bar 108 is provided with apertures at either end, extending vertically therethrough, the apertures being fitted with bushings, as is conventional, such that the bar 108 can move vertically on the bearing shafts 104. A pair of long, threaded shafts or power screws 110 are provided and vertically aligned at opposite ends of the frame assembly laterally inwardly of the bearing shafts 104. Each of the threaded power screws 110 has one end mounted through conventional thrust bearings into the bottom bar 102 such that the power screws may rotate freely relative to the bottom bar 102. Each power screw 110 is also provided at its top end with bearings and extends through suitable apertures in the top bar 100 for free rotation within the bar. The tops of the power screws 110 extend upwardly through the top bar 100, and through conventional bearings and bushing, are connected to a motor drive mechanism which causes rotation of the two power screws. The motor drive system is shown diagrammatically in Fig. 7, and may include a series of drive sprockets 134 connected to a motor 136 via a belt or chain 138. Each of the power screws 110 extends through a respective threaded aperture within the middle bar 108 so that rotation of the power screws 110 causes movement either upwardly or downwardly of the middle bar 108. This explains, in general terms, the framework and movement of the middle bar 108.

Continuing to refer to these Figs. a plate 112 is secured to the front of the top bar 100, and a second plate 114 is secured to the rear of the middle bar 108. The bar 108 has a plurality of push rods 116 extending vertically therethrough, suitable apertures being thus provided in the bar 108, and compression springs, clips and washers collectively identified as 118 in Fig. 9 are provided surrounding the push rods 116 and positioned above the middle bar 108. On the opposite side of the bar 108 from the compression springs, a pressure bar 120 is provided. The pressure bar 120 is also secured to the plate 114 and thus the distance between the pressure bar 120 and the middle bar 108 is fixed. The pressure bar 120 has a plurality of recesses 122 therein (Figure 8) to receive the bellows or compressible bulbs of the pump mechanisms 20. Mounted on the push rods 116 and positioned slightly below the pressure bar 120 is a spring plate 124. The push rods 116 extend through suitable apertures in the spring plate 124 and the spring plate 124 is secured to the pressure bar 120 by a plurality of screws. Resilient O-rings 126 are provided on the side of the spring plate 124 opposite from the pressure bar 120 such that the spring plate 124 may be moved a slight distance away from the pressure bar 120 thereby compressing the O-rings. This feature allows the bases 26 of the pump assemblies 20 to be forced between the pressure bar 120 and the spring plate 124. The spring plate 124 is a thin, flat, metal spring which also has a series of recesses therein to accommodate the downwardly depending blade portions 26 of the pump mechanisms. Positioned at the opposite end of the push rods 116 from the compression springs is an ejector plate 130 which is also generally configured similar to pressure bar 120 and spring plate 124 in that there are a row or series of recesses to permit passage of the blade portions 26 of the pump mechanisms.

The operation of the reciprocating drive system 22 will now be explained. Consider the situation where a plurality of pump mechanisms 20 have their needles embedding in a block 34 of styrofoam, with the pump mechanisms 20 being aligned along the block. The tray 16 containing an array of test tubes 14 is placed within the slide 18 and moved to a first detent position such that the first row of test tubes is positioned at the first station, under the middle bar 108 of the reciprocating drive system 22. The operator of the equipment moves the block 34 of styrofoam into position such that the bases 26 of the pump assemblies 20 are captured between the pressure bar 120 and the spring plate 124, with the flexible tubes 32 extending in arcs generally toward the operator. The power screws 110 are then driven to cause the middle bar 108 initially to move upwardly. As the middle bar 108 moves upwardly, the push rods 116 engage the underside of the top bar 100, thus preventing any further movement of the ejector plate 130. As the bar 108 continues to move upwardly, the ejector plate contacts the top of the styrofoam block 34 and strips the styrofoam block from the blade portions 26.

Continuing with the operation of the reciprocating drive system 22, the middle bar 108 begins to move downwardly toward the row of test tubes 14. Force from the middle bar 108 is transferred in part through the pressure plate 114 to the pressure bar 120 and thus the downward force causes the blade portions 26 to be inserted through the closures 24 of the test tubes 14. Thereafter, middle bar 108 is raised again, with the pump mechanisms 20 still being held by pressure bar 120 and spring plate 124 and with the test tubes 14 being attached via their closures 24 and the blade portions 26 to the pumps 20. It is noted that the ejector plate 130 is configured to strip the styrofoam block 34 (see Figure 5) as previously described but to provide clearance for passage of the test tubes 24.

The pumps 20 and test tubes 14 are raised upward toward rollers of the tube feed system 23. This is shown schematically in Figure 1. As will be discussed in detail after the explanation of reciprocating drive system 22 has been completed, the rollers are then closed and rotated to force the flexible tubes 32 through the needles 28. Then reciprocating drive system 22 moves the pumps 20 and test tubes 14 downward again and stops a rest position previously identified as the first station. The cycle can then be repeated, commencing with movement of the slide 18 inwardly by a step to align a second row of test tubes 14 inwardly. The test tubes 14 are carried along with rack 16, and the initial portion of this inward movement disengages the pumps 20 from the pressure bar 20 and spring plate 24, thus releasing the first row of test tubes (with the pumps 20 now attached and with the ends of the flexible tubes 32 fed into the test tubes) from the reciprocating drive system 22. The released test tubes 14 of the first row fall slightly to rest positions, guided by the apertures in the racks 16. The final portion of the movement when slide 18 is advanced a step aligns a second row of test tubes 14 under the reciprocating system drive. Then the operator takes yet another styrofoam block 34 with pump mechanisms 20 and wedges their bases between the pressure bar 20 and the spring plate 24. Then the operation as previously described is repeated to insert the new pump mechanisms 20 into the second row of the test tubes 14 and to feed in the flexible tubes 32. It will be apparent that the procedure can be repeated, row by row, until pumps 20 have been mounted on all of the test tubes 14 in the rack 16.

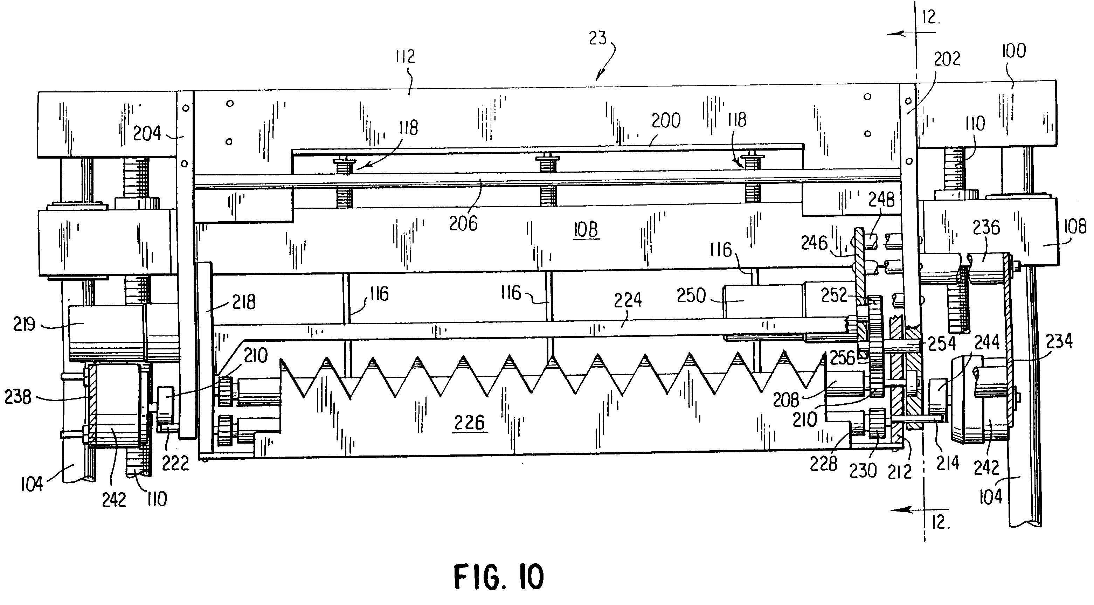

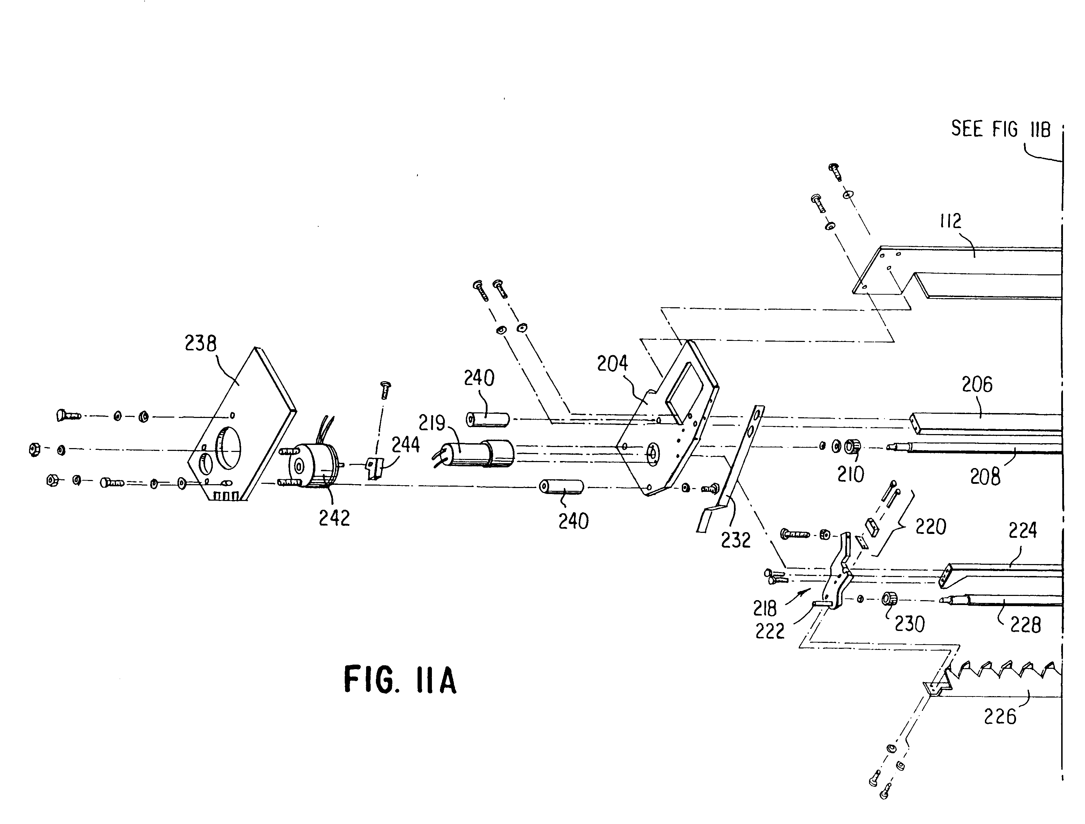

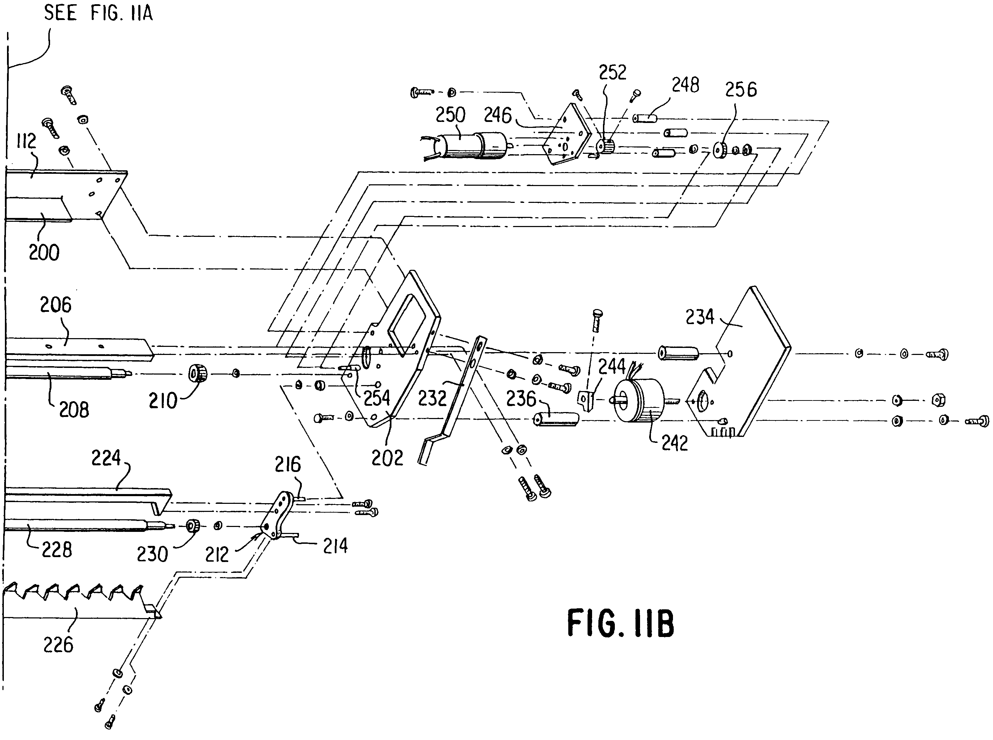

The tube feed system 23 will now be described, with initial reference to Figure 10 and to Figure 11A and 11B. It will be recalled from the previous discussion that plate 112 is attached to the front side of top bar 110. Plate 112 has a ledge 200 which serves to support wiring, not illustrated. Plates 202 and 204 are screwed to plate 112 adjacent its ends and project forwardly. The ends of a brace 206 are screwed to plates 202 and 204. Bearings (not numbered) rotatably mount the ends of a fixed roller 208 to the plates 202 and 204. Gears 210 are affixed to roller to 208 adjacent its ends.

A pivot member 212 has a first leg 214 and a second leg 216 which is parallel to the first leg and which is connected via a bearing (not numbered) to plate 202. On the other side, a gear motor 219 is attached to plate 204. The shaft of motor 219 is flattened (not illustrated) and a pivot member 218 is clamped to it, so that the member 218 is pivotably connected to plate 204 via the shaft of motor 219. The clamp comprises a pair of screws, a pair of washers, a connecting bar, and shim, collectively identified in Figure 11B using reference number 220. Pivot member 218 has only a first leg 222, corresponding generally to the first leg 214 of pivot member 212. One end of a brace 224 is screwed to pivot member 218 and the other end is screwed to pivot member 212. It will be apparent that brace 224 joins pivot 212 and 218 to provide a rigid structure which is pivotable about axis defined the shaft of motor 219 and the second leg 216 of pivot member 212. The rigidity of the structure is further increased by a comb plate 226 which is screwed to pivot members 212 and 216. The function of comb plate 226 will be further described later, and at this point it is appropriate to note that comb plate 226 was not shown in Figures 1 and 2 to facilitate the drawing.

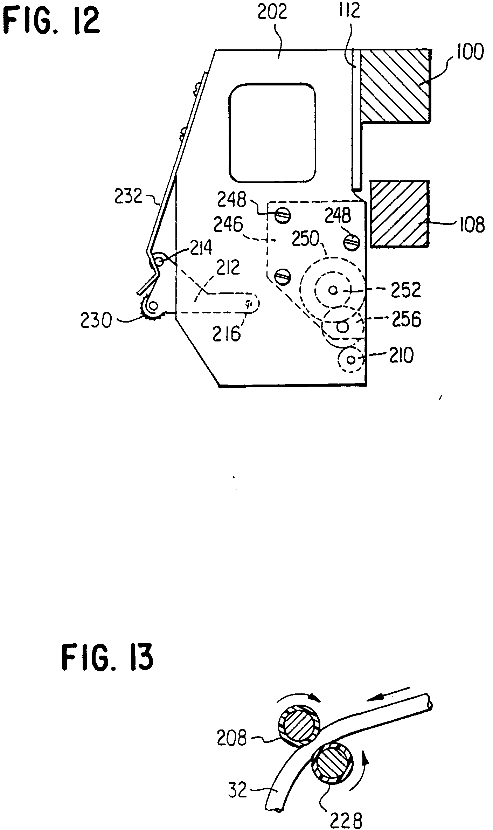

The ends of a swing roller 228 are mounted on the pivot members 212 and 218 via bearings (not numbered). Both swing roller 228 and fixed roller 208 have resilient outer layers on metal cores as shown in Figure 13. Gears 230 are attached to swing roller 228 adjacent its ends. It will be apparent that swing roller 228 is pivotable through an arc, from a raised position to a lowered position. In the lowered position gears 230 mesh with the gears 210 attached to the fixed roller 208 (the gears 208 and 230 preferably have teeth that are taller and narrower than standard involute teeth to facilitate meshing when the gears are brought together). In the raised position, spring arms 232 that are screwed to plates 202 and 204 engage the first leg 214 of pivot member 212 (see Figure 12) and the first leg 222 of pivot member 218 to latch the roller 228 in the raised position. It is noted that springs 232 are not shown in Figure 10 to avoid obscuring the drawing.

With continuing reference to Figures 10, 11A, and 11B, an outer plate 234 is connected via screws and a pair of threaded spacer members 236 to plate 202. Similarly, on the other side an outer plate 238 is connected by screws and a pair of threaded spacer members 240 to the plate 204. A rotary solenoid 242 is bolted to each outer plate. Lever arms 244 are attached to the shafts of the rotary solenoids After motor 218 has been actuated to pivot swing roller 228 from the open position shown in Figure 12 to the closed position, solenoids 242 are actuated and the lever arms 244 engage the first legs 214 and 222 of the pivot members, thereby clamping the swing roller 228 against the fixed roller 208 and bringing the gears 230 into meshing relationship with the gears 210.

An inner plate 246 is mounted on plate 202 via screws and threaded spacers 248. A second gear motor 250 is screwed to inner plate 246, and its shaft extends through therein. A gear 252 is affixed to the shaft. A post 254 is mounted on plate 202 by pressing it into an aperture, and a gear 256 is mounted on posts 254 via a bearing (not numbered). Gear 256 meshes with the gear 210 mounted at the right end (with respect to Figures 10 and 11B) of fixed roller 208. It is noted that one end of top bar 100 has a recess (identified by reference number 258 in Figure 9) to provide clearance for motor 250 and associated elements.

Figure 11A and 11B show various screws, washers, and other hardware which are preferably employed in the tube feed system 23. Although not illustrated, limit switches are preferably attached to plate 204 to detect the open and closed positions of swing roller 228, a potentiometer is preferably provided to permit manual adjustment of the speed of first motor 218, and a second potentiometer is preferably provided to permit manual adjustment of the speed of second motor 250.

The overall operation of tube feed system 23, after the pumps 20 have been inserted and the test tubes 14 have been raised by the reciprocating drive system 22 to the position shown in Figure 1, will now be presented. In this position the fixed roller 208 is disposed between the bellows 30 and the flexible tubes 32 of the pump mechanisms 20, and the outer ends of the flexible tubes 32 droop within the arc of movement of swing roller 228. First, motor 219 is actuated, which dislodges the first legs 214 and 222 of the pivot members from the spring arms 232 and rotates swing roller 228 toward fixed roller 208. In Figure 10, it is noted the rollers are moving toward their closed position. Comb plate 226 moves in unison with roller 228 and aligns the flexible tubes 32 of the pump mechanisms 20. Rotary solenoids 242 are actuated when swing roller 228 reaches its closed position, and shortly thereafter motor 219 is de-actuated. The lever arms 244 mounted on the shafts of solenoids 242 rotate against the first legs 214 and 222, so that the tubes 32 are firmly pinched between the fixed roller 208 and the swing roller 228 in the manner shown in Figure 13. In this pinched state the resilient outer layers of the rollers frictionally engage the tubes 32. While solenoids 242 maintain the pinched state, motor 250 is actuated. Gear 252 rotates gear 256, which in turn rotates the gear 210 at one end of fixed roller 208. This of course rotates fixed roller 208. In the pinched state the gears 230 attached to swing roller 228 mesh with the gears 210 attached to swing roller 228, so swing roller 228 is also rotated. Frictional engagement between the flexible tubes 32 and the resilient outer layers of the rollers 208 and 228 forces the flexible tubes 32 downward through the blade portions 26 of the pumps 20. Motor 250 remains actuated for a predetermined time and at a predetermined speed so that the lower ends of the flexible tubes 32 are advanced to a predetermined depth within the test tube 14. The upper ends remain above the upper surfaces of bases 26 to serve as fluid outlets. Motor 250 is then de-actuated, along with solenoids 242. At this point, motor 219 is re-actuated in the reverse direction to pivot swing roller 228 to its raised or open position, where it is latched by the spring arms 232 after motor 219 is de-actuated. The reciprocating drive system 22 then comes into play again and lowers the row of test tubes 14 back into the rack 16 and the operator proceeds with mounting a new row of pump mechanisms 20 on the next row of test tubes 14 as previously described.

The entire system is preferably operated under microprocessor control as is conventional for the operation of reversible motors and so forth where movement through short distances in a multi-part cycle of operation is desired.

The foregoing is a complete description of a preferred embodiment of the present invention. Numerous changes, modifications and improvements may be made without departing from the scope of the present invention.

**Claims**

1. An apparatus for attaching pump mechanisms (20), to sealed test tubes and for then advancing flexible tubes (32) held by the pump mechanisms into the test tubes, each test tube being sealed by a resilient, puncturable closure and each pump mechanism having puncturing means (27) for puncturing a closure, said apparatus comprising:
   a test tube holder (16) for holding a row of test tubes;
   a pump holder (120, 124) for holding a row of pump mechanisms with their puncturing means directed toward the closures of the test tubes;
   moving means (22) for moving the pump holding means and the test tube holding means together until the puncturing means puncture the closures and for then moving the pump holder and the test tube holder (16) apart while the test tubes are supported via the pump mechanisms by the pump holder (124); and
   a tube feeder (23) actuatable after the closures have been punctured, for urging the flexible tubes toward the test tubes.

2. Apparatus as claimed in claim 1, characterised by a generally vertical support frame (100, 102, 104) on which the tube feeder (23) and pump holder (120, 124) are mounted, the moving means (22) lowering the pump holder (120, 124) toward the test tube holder (16) to move the pump holder (120, 124) and the test tube holder (16) together and raising the pump holder (120, 124) toward the tube feeder (23) to move the pump holder (120, 124) and the test tube holder (16) apart.

3. Apparatus as claimed in claim 1 or 2, characterised in that the tube feeder (23) comprises a roller (208) that is fixed with respect to the support frame (100, 102, 104) and a roller (228) that is swingably mounted with respect to the support frame (100, 102, 104), the swingably mounted roller (228) being movable between open and closed positions with respect to the fixed roller (208).

4. Apparatus as claimed in claim 1, 2 or 3, chharacterised in that the tube feeder (23) further comprises means (232) for latching the swingably mounted roller (228), in the open position.

5. Apparatus as claimed in claim 4, characterised in that the tube feeder (23) further comprises first means (218) for unlatching the swingably mounted roller (228) and moving it towards the closed position, second means (242) for holding the swingably mounted roller (228) in the closed position with the flexible tubes between the rollers, and third means (250) for rotating both rollers (208, 228) while the swingably mounted roller (228) is held in the closed position.

6. Apparatus as claimed in claim 5, characterised in that the first means comprises a reversible motor (218) which rotates in a first direction to unlatch the swingably mounted roller (228) and move it toward the closed position and which rotates in a second direction, after the third means (250) has rotated both rollers (208, 228) to return the swingably mounted roller (228) to the open position.

7. Apparatus as claimed in claim 5 or 6, characterised in that the first means comprises a motor (218), wherein the third means comprises another motor (250), and wherein the second means comprises at least one solenoid (242).

8. Apparatus as claimed in any one of claims 1 to 7, charactersied in that the tube feeder (23) comprises rollers (208, 228) which are movable relative to one another between open and closed positions, first means (218) for moving the rollers (208, 228) from the open position to the closed position, second means (242) for holding the rollers in the closed position with the flexible tubes (32) between them, and third means (250) for rotating the rollers (208, 228).

9. Apparatus as claimed in claim 8, characterised in that the roller moving first means (218) comprises a reversible motor which rotates in a first direction to move the rollers (208, 228) from the open position to the closed position and which rotates in a second position to move the rollers from the closed position to the open position after the rollers (208, 228) have been rotated.

10. Apparatus as claimed in claim 8 or 9, characterised in that the roller moving first means comprises a motor (218) wherein the second means comprises another motor (242), and wherein the third means comprises at least one solenoid (250).

11. A tube feed system, for use in an apparatus according to any preceding claim for mounting a pump mechanism (20) having a puncturing means (27) on a test tube sealed by a closure by puncturing the closure with the puncturing means, to advance a flexible tube (32) carried by the pump mechanism (20) into the test tube through a channel (30) in the puncturing means (27), wherein the tube feed system comprises;

a pair of rollers (208, 228) which are movable with respect to one another between open and closed positions;

holders (16, 124) for holding the test tube and pump mechanism (20) so that the flexible tube (32) is positioned between the rollers (208, 228) when they are moved to the closed position

first moving means (218) for moving the rollers from the open position to the closed position; holding means (242) for holding the rollers (208, 228) in the closed position with the flexible tube pinched between them; and

second moving means (250) for rotating the rollers (208, 228) while they are held in the closed position to force the flexible tube (32) through the channel (30) in the puncturing means (27).

# FIG. 1.

# FIG. 2.

FIG. 4

FIG. 3

EP 0 520 797 A2

FIG 5

FIG. 6.

FIG. 7.

FIG. 8.

EP 0 520 797 A2

FIG. 9.

EP 0 520 797 A2

FIG. 10

EP 0 520 797 A2

SEE FIG IIB

112

206

208

224

228

226

220

210

230

218
222

232

204

240

240

219

244

242

238

**FIG. IIA**

FIG. IIB

SEE FIG. IIA

112

200

206

208

224

228

226

210

230

212

214

216

202

254

232

236

244

242

234

246

250

252

248

256

FIG. 12

FIG. 13